# EUROPEAN PATENT APPLICATION

(11) **EP 4 538 014 A1**
(43) Date of publication of application: **16.04.2025**
(21) Application number: 23823531.1
(22) Date of filing: 24.04.2023
(51) Int. Cl.: B29C 45/17, B29C 45/18, B29C 45/26, B29C 70/06, B29D 23/00, B29K 105/12, B29L 23/00

(54) **RESIN TUBE MANUFACTURING METHOD AND DEVICE**

(30) Priority: 13.06.2022 JP 2022095056
(71) Applicant: The Yokohama Rubber Co., Ltd., Hiratsuka-shi, Kanagawa 254-8601 (JP)
(72) Inventor: KURIBAYASHI, Nobuaki, Hiratsuka-shi, Kanagawa 254-8601 (JP); HOU, Gang, Hiratsuka-shi, Kanagawa 254-8601 (JP); KOITABASHI, Yoshikazu, Annaka-shi, Gunma 379-0211 (JP)
(74) Representative: Grünecker Patent- und Rechtsanwälte PartG mbB
(86) International application number: PCT/JP2023/016087
(87) International publication number: WO 2023/243228

(57) **Abstract**

Provided are a method and a device for manufacturing a resin pipe that can more effectively use a resin in molding the resin pipe by resin injection molding using an assist material. A resin pipe (10) is manufactured by injecting a molten resin (R1) from one end portion (8a) toward the other end portion (8b) of a cavity (8) formed in a mold (7) by an injector (2) and filling the molten resin (R1) in the cavity (8), and then introducing a fluid or solid assist material (As) by an assist material injection device (5) from the other end portion (8b) toward the one end portion (8a) of the cavity (8) to discharge an extra molten resin (R1) from the cavity (8), thereby curing the molten resin (R1) in a cylindrical shape remaining in the cavity (8). The extra molten resin (R1) discharged from the cavity (8) is caused to flow back into the injector (2), and the back-flowed molten resin (R1) is injected and used from the one end portion (8a) toward the other end portion (8b) of the cavity (8) by the injector (2) when manufacturing a next new resin pipe (10).

## Description

### Technical Field

The present invention relates to a method and a device for manufacturing a resin pipe.

### Background Art

As a method for molding a resin pipe by resin injection molding, a gas assist molding method is known which includes injecting a molten resin into a cavity of a mold and subsequently introducing a high-pressure gas, such as a nitrogen gas, into the cavity (see, for example, Patent Document 1). Instead of the high-pressure gas, a solid such as a metal ball or a resin ball may be introduced, as an assist material, into the cavity at a high pressure.

When manufacturing the resin pipe by the resin injection molding using the assist material in this manner, an extra molten resin is discharged from the cavity by the assist material introduced into the cavity. The molten resin discharged from the cavity is then solidified. The solidified resin is, for example, pelletized and reused. However, in order to reuse the resin, a processing step of pelletizing the solidified resin is required, and in the subsequent molding step, the pellets need to be heated and melted, which requires a corresponding amount of energy. In addition, when a reinforcing material such as a reinforcing fiber is mixed in the solidified resin, it is difficult to reuse the resin, and it may be necessary to dispose of the resin in some cases. Therefore, there is room for improvement for more effectively using the resin used in the resin injection molding using the assist material.

### Citation List

### Patent Literature

Patent Document 1: JP 2003-181868 A

### Summary of Invention

### Technical Problem

An object of the present invention is to provide a method and a device for manufacturing a resin pipe that can more effectively use a resin in molding the resin pipe by resin injection molding using an assist material.

### Solution to Problem

In order to achieve the above object, according to an aspect of the present invention, there is provided a method for manufacturing a resin pipe by injecting a molten resin from one end portion toward an other end portion of a cavity extending in a mold by an injector, and then introducing a fluid or solid assist material into the cavity to discharge an extra molten resin of the molten resin from the cavity, thereby curing the molten resin in a cylindrical shape remaining in the cavity, the method including: introducing the assist material from the other end portion toward the one end portion of the cavity to cause the extra molten resin discharged from the cavity to flow back into the injector; and injecting the back-flowed molten resin from the one end portion toward the other end portion of the cavity by the injector when manufacturing a next new resin pipe.

According to another aspect of the present invention, there is provided a device for manufacturing a resin pipe, including: a mold including a cavity extending in the mold; an injector including an injection outlet connected to one end portion of the cavity and configured to inject a molten resin from the one end portion toward an other end portion of the cavity; and an assist material injection device configured to introduce a fluid or solid assist material into the cavity filled with the molten resin, in which an introduction outlet of the assist material injection device is connected to the other end portion of the cavity, the assist material is introduced from the other end portion toward the one end portion of the cavity to cause an extra molten resin of the molten resin from the cavity to flow back into the injector, and the back-flowed molten resin is injected from the one end portion toward the other end portion of the cavity by the injector when manufacturing a next new resin pipe.

### Advantageous Effects of Invention

According to the present invention, the extra molten resin discharged from the cavity by introducing the assist material into the cavity is caused to flow back into the injector and can be used when manufacturing a next new resin pipe. Therefore, the resin to be discarded is suppressed, and the resin can be more effectively reused. This is also advantageous in reducing the energy required for reusing the resin.

### Brief Description of Drawings

FIG. 1 is an explanatory diagram illustrating a device for manufacturing a resin pipe.
FIG. 2 is an explanatory diagram illustrating a mold of FIG. 1 in a longitudinal cross-sectional view.
FIG. 3 is an explanatory diagram illustrating a state in which a molten resin is injected and filled into a cavity of FIG. 2.
FIG. 4 is an explanatory diagram illustrating a state in which an assist material is injected into the cavity of FIG. 3.
FIG. 5 is an explanatory diagram illustrating a resin pipe molded in the cavity of FIG. 4.
FIG. 6 is an explanatory diagram illustrating a manufactured resin pipe in a longitudinal cross-sectional view.
FIG. 7 is an explanatory diagram illustrating the resin pipe of FIG. 6 in a transverse cross-sectional view.
FIG. 8 is an explanatory diagram illustrating another resin pipe in a plan view.

### Description of Embodiments

A method and a device for manufacturing a resin pipe according to an embodiment of the present invention will be described below based on an embodiment illustrated in the drawings.

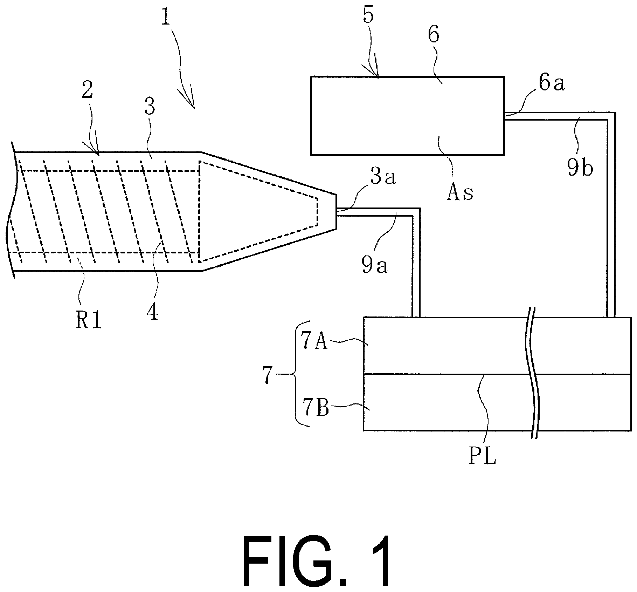

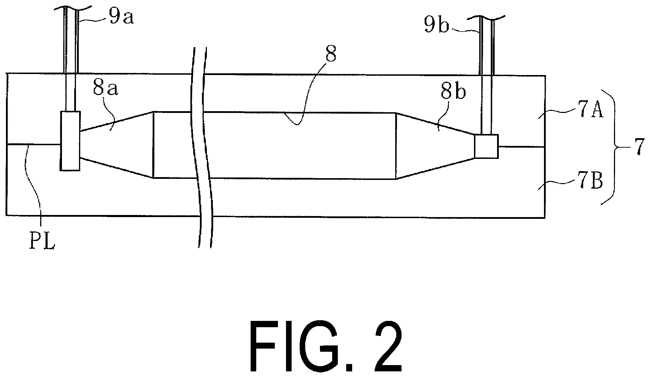

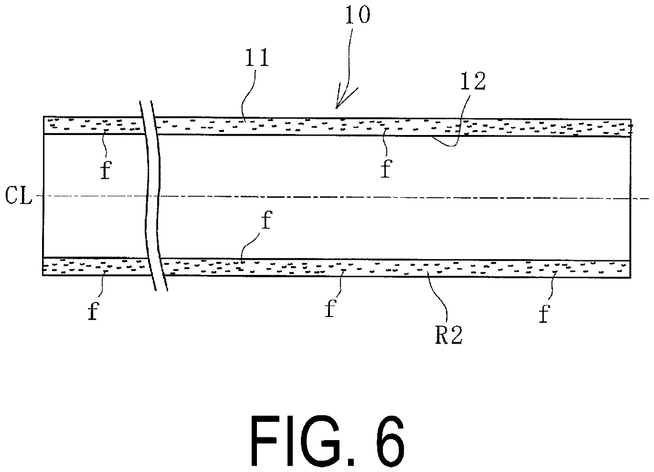

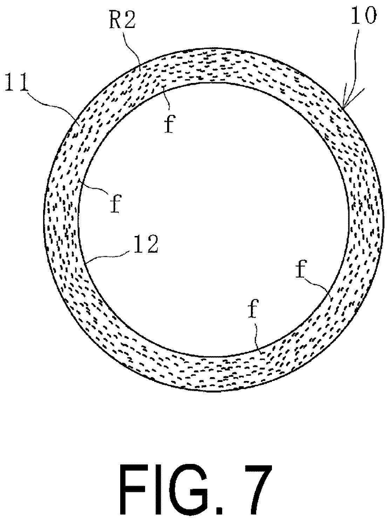

The embodiment of a manufacturing device 1 of a resin pipe illustrated in FIGS. 1 and 2 includes an injector 2, an assist material injection device 5, and a mold 7. A resin pipe 10 illustrated in FIGS. 6 and 7 is manufactured using the manufacturing device 1. The resin pipe 10 is a cylindrical body including a peripheral wall 11 formed by a cured resin R2, and includes a pipe passage 12 extending in a longitudinal direction. A dot-dash line CL in the drawings indicates a center line passing through a center of a transverse cross-section of the resin pipe 10 (pipe passage 12).

Although a size of the resin pipe 10 to be manufactured is not particularly limited, an outer diameter is, for example, about 5 mm or greater and 30 mm or less, and a thickness of the peripheral wall 11 is, for example, about 1 mm or greater and 5 mm or less. The resin pipe 10 includes reinforcing fibers f scattered in the cured resin R2. However, since the reinforcing fibers f are arbitrarily used, it is also possible to manufacture the resin pipe 10 in which the reinforcing fibers f are not present in the cured resin R2. Note that in the drawings, the reinforcing fibers f are shown in an exaggerated manner.

The injector 2 includes a cylinder 3 and a screw 4 provided inside the cylinder 3. The injector 2 is not limited to the type shown in the drawing, and various known resin injection molding machines such as a pre-plasticizing type can be used. An injection path 9a is connected to an injection outlet 3a at a tip of the cylinder 3. The injection path 9a is connected to the mold 7. The resin to be used is heated and melted inside the cylinder 3, and the molten resin R1 is injected from the injection outlet 3a toward the inside of the mold 7 by the rotating (forward rotating) screw 4.

For the resin used as the molten resin R1, an appropriate type of resin is selected from various known resins that can be injected, depending on the performance or the like required for the resin pipe 10. For example, when manufacturing the resin pipe 10 for an air conditioner to be mounted on an automobile, polyamide, polyphenylene sulfide, polypropylene, ABS resin, or the like is used, and nylon resin (such as 66 nylon) is suitably used.

As the reinforcing fibers S, various fibers (for example, short fibers or long fibers such as glass fibers or carbon fibers) can be mixed at a predetermined ratio (for example, 30% parts by mass or more and 40% parts by mass or less per 100 parts by mass of the resin). The short fibers are sized to have, for example, an outer diameter of about 0.001 mm or greater and 1.0 mm or less and a length of about 0.01 mm or greater and 10 mm or less. In this embodiment, the molten resin R1 mixed with reinforcing fibers f is used.

The assist material injection device 5 includes a housing portion 6 in which a fluid (gas or liquid) or solid assist material As is accommodated. As the assist material injection device 5, various known injection devices can be used. For the assist material As, an appropriate known material is selected from a gas such as nitrogen gas or air, a liquid such as water or oil, or a solid such as a metal ball or a resin ball.

An introduction path 9b is connected to an introduction outlet 6a at a tip of the housing portion 6. The introduction path 9b is connected to the mold 7. The assist material As is introduced from the introduction outlet 6a toward the inside of the mold 7 at a predetermined pressure.

The mold 7 is constituted of one mold 7A and the other mold 7B assembled to each other. The molds 7A and 7B are contacted and separated with a parting line PL being a boundary. Although the two-piece mold 7 is used in this embodiment, various other known types of molds 7 can be used.

A cavity 8 that is a hollow cavity is formed in the mold 7. The cavity 8 extends from one end portion 8a to the other end portion 8b in a shape identical to that of the resin pipe 10 to be manufactured. An injection outlet 3a is connected to the one end portion 8a of the cavity 8 via the injection path 9a, and the introduction outlet 6a is connected to the other end portion 8b via the introduction path 9b. The injection outlet 3a may be indirectly or directly connected to the one end portion 8a of the cavity 8, and the introduction outlet 6a may be indirectly or directly connected to the other end portion 8b of the cavity 8.

Next, an example of a procedure of a method for manufacturing the resin pipe 10 using the manufacturing device 1 will be described.

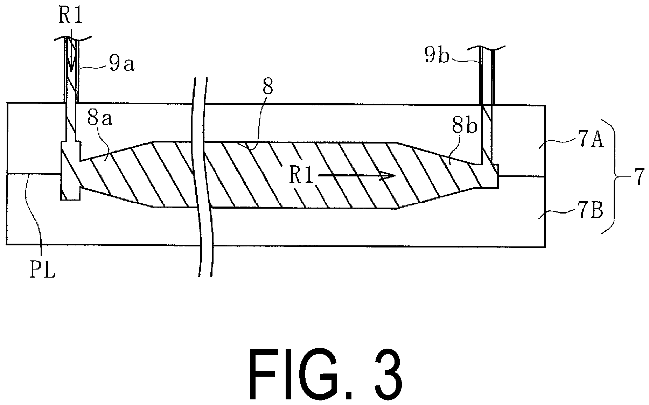

As illustrated in FIG. 2, in a state in which the molds 7A and 7B are assembled to each other and closed, the molten resin R1 is injected into the mold 7 by the injector 2. As illustrated in FIG. 3, the injected molten resin R1 is injected from the injection outlet 3a into the cavity 8 via the injection path 9a. Specifically, the molten resin R1 is injected from the one end portion 8a toward the other end portion 8b of the cavity 8, and the cavity 8 is filled with the molten resin R1. Note that in FIGS. 3 to 5, the reinforcing fibers f mixed in the molten resin R1 are not shown.

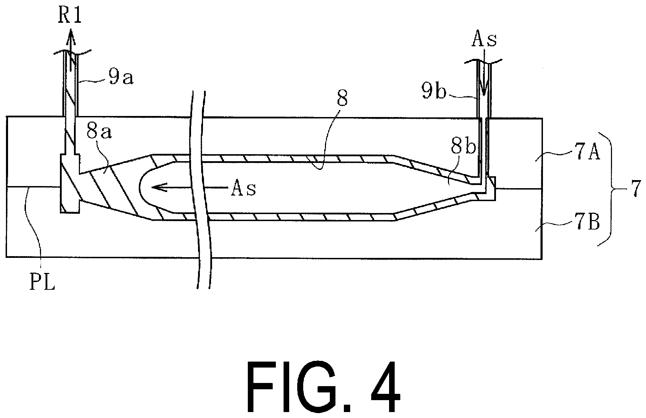

Next, the assist material As is introduced into the mold 7 by the assist material injection device 5. That is, as illustrated in FIG. 4, the assist material As is introduced at a predetermined pressure from the other end portion 8b toward the one end portion 8a of the cavity 8 filled with the molten resin R1. The introduced assist material As passes through the inside of the cavity 8 along the extending direction of the cavity 8 at a predetermined pressure.

When the assist material As passes through the inside of the cavity 8, the extra molten resin R1 is discharged from the one end portion 8a of the cavity 8, and the molten resin R1 adhering to the cavity 8 remains in a cylindrical shape in the cavity 8. When the assist material As is introduced from the assist material injection device 5, the injector 2 retracts the screw 4 to cause the molten resin R1 discharged from the cavity 8 to flow back into the cylinder 3 via the injection path 9a.

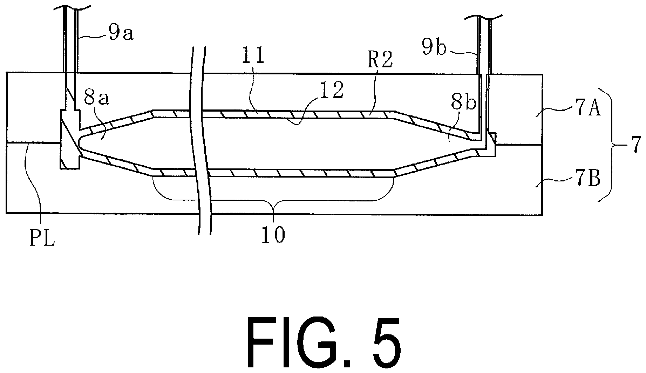

As illustrated in FIG. 5, the remaining molten resin R1 is cured inside the cavity 8. Thus, the resin pipe 10 is molded by the cured resin R2. Useless portions of the cured resin R2 (portions that do not form the resin pipe 10) are integrated with both end portions of the resin pipe 10.

Next, the molds 7A and 7B are separated at the parting line PL to open the mold 7, and the molded resin pipe 10 is taken out together with the useless portions of the cured resin R2. As a result, the cavity 8 is in an empty state. The resin pipe 10 illustrated in FIGS. 6 and 7 is manufactured by cutting off the useless portions of the cured resin R2 from the taken out resin pipe 10.

In the mold 7 in which the cavity 8 is in an empty state, a next new resin pipe 10 is subsequently continuously manufactured. Then, the molten resin R1 flowed back into the cylinder 3 is injected from the one end portion 8a toward the other end portion 8b of the cavity 8 as illustrated in FIG. 3 in the same procedure as described above. Next, as illustrated in FIG. 4, the assist material As is introduced at a predetermined pressure from the other end portion 8b toward the one end portion 8a of the cavity 8 filled with the molten resin R1 in the same procedure as described above. As a result, a new resin pipe 10 is molded, and the extra molten resin R1 discharged from the cavity 8 is caused to flow back into the cylinder 3 via the injection path 9a.

In this manufacturing method, the extra molten resin R1 discharged from the cavity 8 by introducing the assist material As into the cavity 8 is caused to flow back into the injector 2 and can be used when manufacturing a next new resin pipe 10. Therefore, the resin to be discarded is suppressed, and the resin can be more effectively reused.

If the assist material As is introduced from the one end portion 8a toward the other end portion 8b of the cavity 8 as in the related art, the molten resin R1 discharged from the cavity 8 is cured as it is without flowing back into the injector 2. Along with this, a large amount of useless portions of the cured resin R2 are generated. However, according to the manufacturing method described above, the amount of useless portions of the cured resin R2 can be suppressed. When the molten resin R1 mixed with the reinforcing fibers f is used as in this embodiment, it is difficult to reuse the cured resin R2 because the reinforcing fibers f are included in the cured resin R2. However, the above-described manufacturing method is particularly effective in effectively using the resin without wasting it, and is very effective in suppressing the material (resin) cost in the case of an expensive resin.

In addition, in the above-described manufacturing method, the extra molten resin R1 discharged from the cavity 8 is subsequently used as an injection material in the molding step. Therefore, it is not necessary to perform a processing step of pelletizing the generated useless portions of the cured resin R2 in order to reuse the useless portions or to melt the pellets thereafter, which is advantageous in suppressing energy required for reusing the resins.

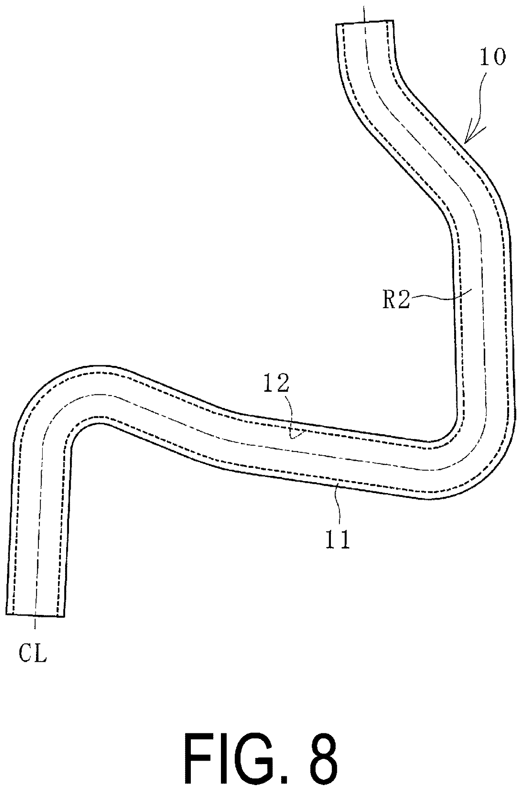

Although the resin pipe 10 manufactured in the above-described embodiment is a straight pipe in which the pipe passage 12 is linear, the shape of the resin pipe 10 is not particularly limited. Since the resin pipe 10 is molded using the assist material As, it is suitable for manufacturing a non-straight pipe including the pipe passage 12 that is bent as the resin pipe 10 illustrated in FIG. 8. In the above-described manufacturing method, even the resin pipe 10 including a plurality of bent portions can be manufactured with high productivity.

### Reference Signs List

1 Manufacturing device of resin pipe
2 Injector
3 Cylinder
3a Injection outlet
4 Screw
5 Assist material injection device
6 Housing portion
6a Introduction outlet
7 (7A, 7B) Mold
8 Cavity
8a One end portion
8b Other end portion
9a Injection path
9b Introduction path
10 Resin pipe
11 Peripheral wall
12 Pipe passage
R1 Molten resin
R2 Cured resin
As Assist material
f Reinforcing fiber

## Claims

1. A method for manufacturing a resin pipe by injecting a molten resin from one end portion toward an other end portion of a cavity extending in a mold by an injector, and then introducing a fluid or solid assist material into the cavity to discharge an extra molten resin of the molten resin from the cavity, thereby curing the molten resin in a cylindrical shape remaining in the cavity, the method comprising:
introducing the assist material from the other end portion toward the one end portion of the cavity to cause the extra molten resin discharged from the cavity to flow back into the injector; and
injecting the back-flowed molten resin from the one end portion toward the other end portion of the cavity by the injector when manufacturing a next new resin pipe.

2. The method for manufacturing a resin pipe according to claim 1, wherein the molten resin mixed with reinforcing fibers is used.

3. The method for manufacturing a resin pipe according to claim 1 or 2, wherein the resin pipe is a non-straight pipe comprising a pipe passage that is bent.

4. A device for manufacturing a resin pipe, comprising:
a mold comprising a cavity extending in the mold;
an injector comprising an injection outlet connected to one end portion of the cavity and configured to inject a molten resin from the one end portion toward an other end portion of the cavity; and
an assist material injection device configured to introduce a fluid or solid assist material into the cavity filled with the molten resin,
an introduction outlet of the assist material injection device being connected to the other end portion of the cavity,
the assist material being introduced from the other end portion toward the one end portion of the cavity to cause an extra molten resin of the molten resin from the cavity to flow back into the injector, and
the back-flowed molten resin being injected from the one end portion toward the other end portion of the cavity by the injector when manufacturing a next new resin pipe.
